# EUROPEAN PATENT SPECIFICATION

(11) **EP 4 341 573 B1**
(45) Date of publication and mention of the grant of the patent: **25.06.2025**
(21) Application number: 22729308.1
(22) Date of filing: 13.05.2022
(51) Int. Cl.: F16D 69/02

(54) **PROCESSES TO PRODUCE A FRICTION ELEMENT EQUIPPED WITH A COMPOUND WITHOUT HARMFUL COMPONENTS**
VERFAHREN ZUR HERSTELLUNG EINES REIBUNGSELEMENTS MIT EINER VERBINDUNG OHNE SCHÄDLICHE KOMPONENTEN
PROCÉDÉS DE PRODUCTION D'ÉLÉMENT DE FROTTEMENT DOTÉ D'UN COMPOSÉ SANS COMPOSANTS NOCIFS

(30) Priority: 19.05.2021 IT 202100012974
(43) Date of publication of application: 27.03.2024
(73) Proprietor: Sannio Brake S.r.l., 81010 Gioia Sannitica (CE) (IT)
(72) Inventor: BELLICOSO, Antonio, 81010 GIOIA SANNITICA (CE) (IT)
(74) Representative: Garavelli, Paolo
(86) International application number: PCT/IT2022/050126
(87) International publication number: WO 2022/244024

(56) References cited:
- EP-A1- 2 381 123
- EP-A1- 2 556 267

## Description

The present invention refers to processes for producing a friction element equipped with a compound completely free of components harmful to the public health, in particular a mixture of friction material.

As known, a disc brake pad essentially consists of two parts: a steel support plate, and a layer of friction material. The disc braking system of a vehicle is made up of four cast iron discs integral with the wheels and four hydraulic calipers supported on the vehicle frame and designed to "bite" the cast iron disc. These hydraulic calipers are controlled by the brake pedal and two pads are housed inside each caliper, so there are eight pads in each vehicle. During braking, the brake pads are violently compressed against the discs, dissipating the vehicle's kinetic energy in the form of frictional heat.

The friction material of the pads must therefore have an appropriate coefficient of friction and mechanical resistance, in order to ensure, in an emergency, the shortest possible braking distance. The friction material must also have a considerable resistance to compression; moreover, since the brake pad must necessarily be exposed to air in order to dissipate heat, the friction material must have a considerable resistance to atmospheric agents.

A friction material for disc brake pads for cars is known in the art, and is composed of a composite material with a polymeric matrix, i.e. a reinforcing fiber such as a Kevlar fiber, or a glass fiber, or a ceramic fiber, or a steel fiber, immersed in a binder resin, of very hard metal oxides and silicates which give the pad a suitable coefficient of friction. Furthermore, there are lubricants, metal sulphides or graphite in flakes or powder that stabilize the coefficient of friction and reduce the wear of the pad, and volume fillers such as various inorganic salts, mica, vermiculite, etc. But, during the production process of the friction material, the aforementioned components develop gaseous substances, such as ammonia and formaldehyde, that are harmful to public health, compromising the physical properties of the friction material.

Known friction material compounds normally used in braking systems can be classified into two families: organic and sintered. Currently, sintered compounds are composed of ductile metal powders designed to give stability to the disc brake at high temperatures, with the addition of lubricants, which contribute to the overall braking stability, and are composed of abrasives that guarantee the cleaning of the disc brake disc; these components are agglomerated together through a process with high pressure and temperature values. The compound is fixed to the metal support of the disc brake pad without adding any glue through a chemical process at high pressure and temperature values. The organic compounds are mainly composed of binder resins, metals suitable for conferring stability to the disc brake, lubricants, and abrasives. In this case, the organic material is fixed to the disc brake pad plate by using special nitrile glue.

The compounds described in the following patents are also known:
- CN-A-104946200 and US-A-2016265612, which describe compounds free of some toxic substances, such as asbestos;
- US-A-4812367, in which a blend is characterized by a non-toxic metal oxide powder and glass spheres;
- US-A-2016347949, in which a compound is composed of phenolic resins;
- US-A-2016312846, in which a blend is composed of an alkali metal salt;
- US-A-2016289126, in which a mixture is composed of copper, and of a silicate, such as muscovite;
- US-A-2016265612, in which a blend is composed of a 0.5% copper alloy, and a titanate salt containing antimony trisulphide or powdered zinc.

It is evident how these compounds described in the aforementioned patents describe compounds free of some components harmful to public health, but they are not completely free of harmful substances and at the same time they are not able to give high efficiency to the disc brake on which they are fixed.

Current anti-pollution regulations provide for the elimination and/or reduction of a plurality of highly toxic components present in the compounds currently in use, aimed at the production of brake linings and pads such as: asbestos, lead, zinc, graphite and most of the oxides. Consequently, there are currently no known compounds without toxic components which can guarantee the same characteristics of efficiency and duration as the known toxic compounds.

The study and construction of a friction material without harmful components but with high performance, requires high technical skills in the field of research and development, both in laboratory and on the road, reducing the number of companies able to support investments in terms of human resources and laboratory tools.

Finally, a mixture is known obtained by joining an elastomer with various chemical agents intended to stabilize it, color it and give it the desired commodity properties; this blend is also equipped with ingredients necessary for the vulcanization of the blend. Vulcanization is an irreversible process which gives the blend the typical properties that characterize it. In particular, the mixture is prepared in a special closed mixer with interpenetrating or tangential rotors, suitable for softening the elastomer and amalgamating the components of the mixture together. The process generally takes place at an initial temperature of 10 °C up to a final temperature of 50 °C.

Currently, known mixers are equipped with sharp propellers aimed at reducing lumps inside the compound, and are not able to effectively break the bonds of the metal elements present and to favor the mixing of the elements of the compound, in particular when an exceeding critical temperature is localized only in some point of the friction material, compromising the further processing steps of the compound itself.

Document EP-A1-2 556 267 describes a friction material and the related production process according to the prior art.

Object of the present invention is solving the aforementioned prior art problems by providing a process for producing a compound completely free of components harmful to public health.

A further object of the present invention is providing a process for obtaining a friction element equipped with a compound capable of ensuring high efficiency and durability of the friction element on which it is arranged.

The aforementioned and other objects and advantages of the invention, which will emerge from the following description, are achieved with processes for producing friction elements equipped with a compound free of harmful components, such as those described in the respective independent claims.

It is understood that all attached claims form an integral part of the present description.

It will be immediately obvious that innumerable variations and modifications (for example relating to shape, dimensions, arrangements and parts with equivalent functionality) can be made to what is described, without departing from the scope of the invention as appears from the attached claims.

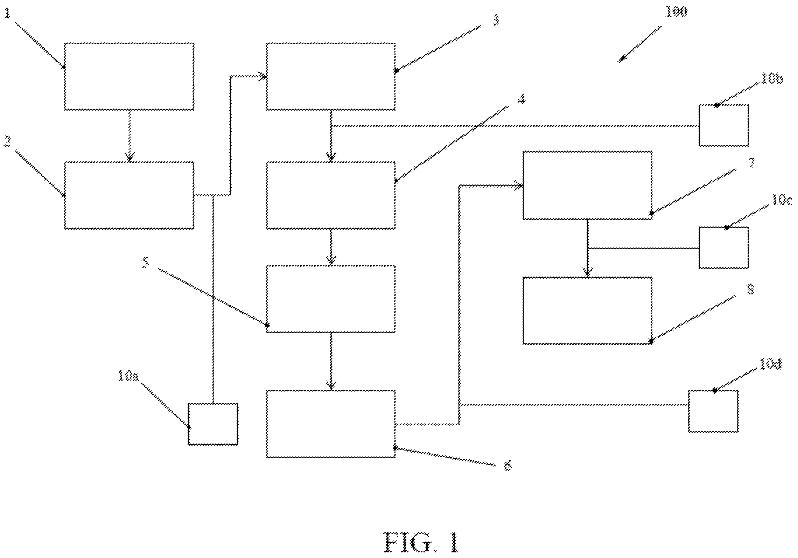

The present invention will be better described by some preferred embodiments, provided by way of non-limiting example, with reference to the Figure which shows a process of the present invention for obtaining a friction element equipped with the above described compound.

A mixture of friction material completely free of components harmful to public health, and a production process of the compound are described, the compound suitable to be coupled on a support element of a friction element such as, for example, a disk brake, a friction lining, or a brake pad for trains, for subways, for trams, for Leopard tanks, for amphibious landing craft, for commercial vehicles, or brake pads and strips for aircraft, or rings, or soaked strips of oil, etc.

In particular, the friction element of a disc brake essentially consists of two parts: a support element, and a layer of the friction material compound coupled to the support element by at least one thermal and mechanical process, such as, for example, a sintering process, designed to give the compound a high efficiency and duration of use.

The compound is composed of the following components present each with a percentage by weight with respect to the total weight of the compound:
- from 5% to 10% of diamagnetic material, such as, for example, bismite;
- from 4% to 12% of rock wool;
- from 17% to 25% of a plurality of phenolic resins, suitable to perform a binder function between a plurality of components of the compound and to give the compound fireproof properties, reducing the fatigue of the friction element of the disc brake during use;
- from 17% to 25% of iron fiber, capable of giving the compound a high thermal conductivity, allowing a low working temperature; advantageously, the iron fiber is a replacement for a toxic substance used in the compounds;
- a plurality of metallic materials: from 6% to 16% of brass flakes; 10% to 18% of bronze flakes; 7% to 15% of copper flakes; and 13% to 22% of dehydrated flake iron; and
- from 2% to 8% of liquid rubber.

The plurality of metallic materials and liquid rubber are able to amalgamate the compound giving it a suitable density, and are able to modify the friction coefficient of the compound according to their intervals of use, replacing lead, zinc and graphite commonly used in friction materials which are known to be toxic and harmful. In addition, the plurality of metal materials contributes, together with the phenolic resins, to give the compound fire retardant properties, reducing the fatigue of the disc brake during use.

The diamagnetic material is able to prevent the formation of a plurality of magnetic fields, interrupting the magnetic flux induced in the compound by the static currents that are formed on the brake disc during the rotation of the disc, consequently interrupting the circulation of a plurality of induced currents on the disc by the magnetic field generated by a plurality of currents circulating in the compound and on the surface of the disc; advantageously, the diamagnetic material prevents the formation of a plurality of currents induced simultaneously in the compound and on the surface of the brake disc.

The rock wool is an amorphous silicate obtained from rocks, able to stabilize the friction coefficient of the friction element of the disc brake, and is equipped with a characteristic macroscopic languorous structure that gives it both sound-absorbing properties, guaranteeing a lowering of the noise during the use of the friction element of the disc brake, and insulating properties, incorporating high quantities of air into the internal structure, giving the compound a high resistance to high temperatures.

A process according to the present invention is then described for the production of the friction material mixture indicated above by means of the use of a mechanical instrument, such as, for example, a mixer equipped internally with a plurality of beveled propellers, suitable to compound to amalgamate the mixture; in particular, the mechanical instrument is able to break the ionic bonds of the plurality of metallic materials, favoring an optimized mixing of the plurality of components of the compound; moreover, the mixer is equipped with an internal compartment, suitable for containing the plurality of components of the mixture, and externally wrapped by a mechanical element with water jet, suitable for cooling the internal compartment, allowing to maintain a value inside the compartment of optimal and constant temperature, even under adverse weather conditions, and allowing an optimization of the mixture inside the mixer.

Currently, known mechanical tools are mixers with sharp propellers aimed at reducing the lumps within the mixture, and are not able to effectively break the bonds of metal materials present in the mixture and facilitate the mixing of the components of the mixture.

Furthermore, the compound production process consists of the following steps:
- preparing the mechanical instrument;
- mixing 40% by weight of at least one rubber in granules with 60% by weight of at least one solvent, such as acetone, or other similar;
- obtaining the liquid rubber;
- sieving the diamagnetic material, the rock wool, the plurality of phenolic resins, the plurality of metallic materials, with the exception of glass fiber;
- inserting and mixing in the mechanical instrument the diamagnetic material, the rock wool, the plurality of phenolic resins, the iron fiber, and the plurality of metallic materials;
- inserting the liquid rubber into the mechanical instrument;
- obtaining a pre-compound;
- mixing 1 the pre-compound with the liquid rubber in the mechanical tool;
- obtaining the mixture;

Finally, the compound is able to be coupled to the support element of the friction element by means of a thermal and mechanical process designed to give the friction element a high efficiency and duration of use.

As shown in the Figure, the friction element is obtained by a process 100 comprising the steps of:
- preparing the mixture;
- inserting the mixture, by means of a volumetric dosing machine, into a machine, such as, for example, a drawing machine, or cold press or other similar, suitable for preforming the mixture;
- obtaining 2 a plurality of preformed compound elements, equipped with a smooth upper surface free of rubber veins and air bubbles, and of dimensions compatible with the dimensions of the support element of the friction element;
- arranging the plurality of preformed elements on an element, such as, for example, a trolley, able to favor the transpiration and drying of the plurality of preformed elements;
- verifying 10a the drying of the plurality of preformed elements;
- providing a plurality of support elements;
- arranging at least one gluing means on the upper surface of each of the plurality of support elements;
- heating an upper and a lower surface of a pressing machine such as, for example, an oil-dynamic or mechanical or hydraulic press or hydroforming machines, at a constant temperature value of at least 150 °C, and at a value of pressure of at least 150 Kg/cm²;
- inserting the plurality of preformed elements between the upper and lower surfaces of the pressing machine;
- closing the pressing machine for an appropriate time interval;
- coupling the lower surface of each of the plurality of preformed elements with the upper surface of each of the plurality of support elements;
- developing 3 a thermosetting process, such as, for example, vulcanization of the mixture, at a temperature value of about 150 °C, and relative coupling of the lower surface of each of the plurality of preformed elements with the upper surface of each of the plurality of support elements;
- verifying 10b the thermosetting process;
- obtaining 4 the friction element;
- stabilizing 5 the friction element in a device that generates heat, such as, for example, an oven, for a duration of 5-6 hours, at a temperature of about 150 °C;
- leveling, smoothing and grinding 6 the friction element by means of a tumbler device;
- verifying 10c the presence of any imperfections in the friction element;
- painting 7 the friction element, giving it an additional protective element;
- possibly inserting a wear indicator;
- verifying 10b the painting 7 of the friction element; and
- packaging 8 the friction element.

## Claims

1. Process for producing at least one support element of at least one friction element, in particular of at least one disc brake, said friction element being equipped with a friction material compound free of harmful components, said compound being composed of the following components, each with a percentage by weight with respect to the total weight of the compound:
- from 5% to 10% of at least one diamagnetic material;
- from 4% to 12% of a rock wool;
- from 17% to 25% of a plurality of phenolic resins;
- from 17% to 25% of at least one iron fiber;
- a plurality of metallic materials, in particular 6% to 16% of brass flakes; 10% to 18% of bronze flakes; 7% to 15% of copper flakes; and 13% to 22% of dehydrated flake iron; and
- from 2% to 8% of liquid rubber;
said process comprising the steps of:
- providing a mechanical instrument for mixing said friction material compound, said mechanical instrument being equipped with at least one compartment containing a plurality of beveled propellers, suitable for mixing and amalgamating said compound, and with at least one mechanical element with water jet, suitable for a constant cooling of said compartment, favoring a constant maintenance of at least one temperature value of said compound;
- mixing 40% by weight of at least one rubber in granules with 60% by weight of at least one solvent;
- obtaining said liquid rubber;
- sieving said diamagnetic material, said rock wool, said plurality of phenolic resins, said iron fiber, said plurality of metallic materials;
- inserting and mixing in said mechanical instrument said diamagnetic material, said rock wool, said plurality of phenolic resins, said iron fiber, said plurality of metallic materials;
- inserting said liquid rubber into said mechanical instrument;
- obtaining a pre-compound;
- mixing (1) said pre-compound with said liquid rubber in said mechanical instrument;
- obtaining said compound;
- inserting said compound, by means of at least one volumetric dosing machine, into at least one machine, said machine being suitable for preforming said compound;
- obtaining (2) a plurality of preformed elements of said compound;
- - arranging said plurality of preformed elements on at least one element;
- checking (10a) the drying of said plurality of preformed elements;
- providing a plurality of support elements;
- arranging at least one gluing means on the upper surface of each of said plurality of support elements;
- heating at least one upper floor and at least one lower floor of at least one pressing machine to at least a constant temperature value of at least 150°C, and at least a pressure value of at least 150 Kg/cm²;
- inserting said plurality of preformed elements between said upper and said lower plane of said pressing machine, and closing said pressing machine for at least an interval of time,
- coupling the lower surface of each of said plurality of preformed elements with said upper surface of each of said plurality of support elements;
- developing (3) at least one thermosetting process at said constant temperature value of 150 °C, and a relative coupling of said lower surface of each of said plurality of preformed elements with said upper surface of each of said plurality of support elements;
- verifying (10b) said thermosetting process;
- obtaining (4) said friction element;
- stabilizing (5) said friction element in at least one device capable of generating heat, for a duration of at least 5-6 hours, at said temperature value of at least 150 °C;
- leveling, flattening and grinding (6) said friction element by means of at least one tumbler device;
- verifying (10c) any imperfections of said friction element;
- painting (7) said friction element;
- inserting a wear indicator;
- verifying (10b) the painting (7) of said friction element; and
- packaging (8) said friction element.

## Patentansprüche

1. Verfahren zur Herstellung mindestens eines Trägerelements mindestens eines Reibelements, insbesondere mindestens einer Scheibenbremse, wobei das Reibelement mit einer Mischung aus Reibmaterial frei von schädlichen Bestandteilen ausgestattet wird, wobei sich die Mischung aus folgenden Komponenten zusammensetzt, jeweils mit Gewichtsprozent im Vergleich zum Gesamtgewicht der Verbindung:
- 5 % bis 10 % mindestens eines diamagnetischen Materials;
- 4 % bis 12 % Steinwolle;
- 17 % bis 25 % einer Vielzahl von Phenolharzen;
- 17 % bis 25 % mindestens einer Eisenfaser;
- eine Vielzahl metallischer Materialien, insbesondere 6 % bis 16 % Messingplättchen; 10 % bis 18 % Bronzeflocken; 7 % bis 15 % Kupferflocken; und 13 % bis 22 % dehydriertes Flockeneisen; und
- 2 % bis 8 % Flüssigkautschuk;
besagtes Verfahren einschließlich der folgenden Phasen:
- Bereitstellung eines mechanischen Instruments zum Mischen der Reibungsmaterialmischung, wobei das mechanische Instrument mit mindestens einem Fach ausgestattet ist, das mehrere abgeschrägte Propeller enthält, die zum Mischen und Zusammenführen der Mischung geeignet sind, und mit mindestens einem mechanischen Wasserstrahlelement für eine konstante Kühlung des Fachs, wodurch die konstante Aufrechterhaltung mindestens eines Temperaturwerts der Mischung begünstigt wird;
- Mischen von 40 Gew.-% mindestens eines Gummigranulats mit 60 Gew.-% mindestens eines Lösungsmittels;
- Erhalten des flüssigen Gummis;
- Sieben des diamagnetischen Materials, der Steinwolle, der mehreren Phenolharze und der mehreren metallischen Materialien;
- Einbringen und Mischen des diamagnetischen Materials, der Steinwolle, der mehreren Phenolharze, der Eisenfasern und der mehreren metallischen Materialien in das mechanische Instrument;
- Einführen des flüssigen Gummis in das mechanische Instrument;
- Erhalten einer Vormischung;
- Mischen (1) der Vormischung mit dem flüssigen Gummi in dem mechanischen Gerät;
- Erhalten der Mischung;
- Einbringen der Mischung mittels mindestens eines volumetrischen Spenders in mindestens eine Maschine, wobei die Maschine zur Vorformung der Mischung geeignet ist;
- Erhalten (2) mehrerer vorgeformter Elemente der Mischung;
- Anordnung der mehreren vorgeformten Elemente auf mindestens einem Element;
- Überprüfung (10a) des Trocknens der Vielzahl vorgeformter Elemente;
- Bereitstellung einer Vielzahl von Stützelementen;
- Anordnung mindestens eines Klebemittels auf der Oberseite jedes der mehreren Stützelemente;
- Erhitzen mindestens einer oberen Etage und mindestens einer unteren Etage mindestens einer Pressmaschine auf mindestens einen konstanten Temperaturwert von mindestens 150 °C und mindestens einen Druckwert von mindestens 150 kg/cm²;
- Einsetzen der mehreren vorgeformten Elemente zwischen der oberen Ebene und der unteren Ebene der Pressmaschine und Schließen der Pressmaschine für mindestens eine Zeitspanne;
- Koppeln der unteren Oberfläche jedes der mehreren vorgeformten Elemente mit der oberen Oberfläche jedes der mehreren Stützelemente;
- Entwicklung (3) mindestens eines Duroplastprozesses bei dem konstanten Temperaturwert von 150 °C und einer relativen Kopplung der unteren Oberfläche jedes der mehreren vorgeformten Elemente mit der oberen Oberfläche jedes der mehreren Stützelemente;
- Überprüfung (10b) des Duroplastprozesses;
- Erhalten (4) des Reibungselements;
- Stabilisierung (5) des Reibungselements in mindestens einer Vorrichtung, die Wärme erzeugen kann, für eine Dauer von mindestens 5-6 Stunden bei einem Temperaturwert von mindestens 150 °C;
- Nivellieren, Glätten und Schleifen (6) des Reibungselements unter Verwendung mindestens einer Trommelvorrichtung;
- Überprüfung (10c) etwaiger Unvollkommenheiten des Reibungselements;
- Lackieren (7) des Reibungselements;
- Aufnahme einer Verschleißanzeige;
- Überprüfung (10b) der Lackierung (7) des Reibungselements; und
- Verpackung (8) des Reibungselements.

## Revendications

1. Procédé de réalisation d'au moins un élément support d'au moins un élément de friction, notamment d'au moins un frein à disque, ledit élément de friction étant équipé d'un mélange de matériau de friction exempt de composants nocifs, ledit mélange étant composé des composants suivants, chacun avec % en poids par rapport au poids total du composé:
- de 5% à 10% d'au moins un matériau diamagnétique;
- de 4% à 12% d'une laine de roche;
- de 17% à 25% d'une pluralité de résines phénoliques;
- de 17% à 25% d'au moins une fibre de fer;
- une pluralité de matériaux métalliques, notamment de 6% à 16% de paillettes de laiton; de 10 % à 18 % de paillettes de bronze; 7 % à 15 % de paillettes de cuivre; et 13 % à 22 % de fer en flocons déshydraté; et
- de 2% à 8% de caoutchouc liquide;
ladite procédure comprenant les phases de:
- fourniture d'un instrument mécanique pour mélanger ledit mélange de matériau de friction, ledit instrument mécanique étant équipé d'au moins un compartiment contenant une pluralité d'hélices biseautées, adapté pour mélanger et amalgamer ledit mélange, et d'au moins un élément mécanique de jet d'eau, adapté pour un refroidissement constant dudit compartiment, favorisant le maintien constant d'au moins une valeur de température dudit mélange;
- mélanger 40 % en poids d'au moins un granulé de caoutchouc avec 60 % en poids d'au moins un solvant;
- obtenir ledit caoutchouc liquide;
- tamisage dudit matériau diamagnétique, de ladite laine de roche, de ladite pluralité de résines phénoliques, de ladite pluralité de matériaux métalliques;
- insertion et mélange dans ledit instrument mécanique dudit matériau diamagnétique, de ladite laine de roche, de ladite pluralité de résines phénoliques, de ladite fibre de fer, de ladite pluralité de matériaux métalliques;
- insertion dudit caoutchouc liquide dans ledit instrument mécanique;
- obtention d'un pré-mix;
- mélange (1) dudit pré-mélange avec ledit caoutchouc liquide dans ledit instrument mécanique;
- obtention dudit mélange;
- insertion dudit mélange, au moyen d'au moins un doseur volumétrique, dans au moins une machine, ladite machine étant adaptée au préformage dudit mélange;
- obtention (2) d'une pluralité d'éléments préformés dudit mélange;
- disposition de ladite pluralité d'éléments préformés sur au moins un élément;
- vérification (10a) du séchage de ladite pluralité d'éléments préformés;
- fourniture d'une pluralité d'éléments de support;
- disposition d'au moins un moyen de collage sur la surface supérieure de chacun de ladite pluralité d'éléments de support;
- chauffer au moins un étage supérieur et au moins un étage inférieur d'au moins une machine de pressage jusqu'à au moins une valeur de température constante d'au moins 150 °C et au moins une valeur de pression d'au moins 150 kg/cm²;
- insertion de ladite pluralité d'éléments préformés entre ledit plan supérieur et ledit plan inférieur de ladite presse, et fermeture de ladite presse pendant au moins un intervalle de temps;
- coupler la surface inférieure de chacun de ladite pluralité d'éléments préformés avec ladite surface supérieure de chacun de ladite pluralité d'éléments de support;
- développement (3) d'au moins un processus de thermodurcissable à ladite valeur de température constante de 150 °C, et couplage relatif de ladite surface inférieure de chacun de ladite pluralité d'éléments préformés avec ladite surface supérieure de chacun de ladite pluralité d'éléments de support;
- vérification (10b) dudit processus de thermodurcissable;
- obtention (4) dudit élément de friction;
- stabilisation (5) dudit élément de friction dans au moins un dispositif capable de générer de la chaleur, pendant une durée d'au moins 5 à 6 heures, à ladite valeur de température d'au moins 150 °C;
- nivellement, aplatissement et meulage (6) dudit élément de friction à l'aide d'au moins un dispositif de culbutage;
- vérification (10c) des éventuelles imperfections dudit élément de friction;
- peinture (7) dudit élément de friction;
- inclusion d'un indicateur d'usure;
- vérification (10b) de la peinture (7) dudit élément de friction; et
- emballage (8) dudit élément de friction.
